# EUROPEAN PATENT APPLICATION

(11) **EP 4 668 227 A1**
(43) Date of publication of application: **24.12.2025**
(21) Application number: 24204037.6
(22) Date of filing: 01.10.2024
(51) Int. Cl.: G06V 10/774, G06V 20/56

(54) **DYNAMIC IN-CORRELATION SIGNATURE GENERATION**

(30) Priority: 18.06.2024 US 202418746185
(71) Applicant: Autobrains Technologies LTD., 6713701 Tel Aviv (IL)
(72) Inventor: RAICHELGAUZ, Igal, 6329302 Tel Aviv (IL)
(74) Representative: Kraus & Lederer PartGmbB

(57) **Abstract**

A method that includes (i) generating, in a first iterative process, a first signature comprising first identifiers that are indicative of at least one of (a) a feature of a road element associated with the first signature or (b) a feature of a generation of the first signature, the first identifiers being generated in correlation to each other, and (ii) generate, in a second iterative process, a second signature comprising second identifiers that are indicative of (a) a feature of a road element associated with the second signature or (b) a feature of a generation of the second signature, the second identifiers being generated in correlation to each other; wherein the second identifiers of the second signature are generated in de-correlation to the first identifiers of the first signature, and wherein the first signature and the second signature collectively represent a cluster of sensed information.

## Description

### BACKGROUND

Assisted and autonomous driving systems are known in the art. In such systems, computer implemented systems control (at least to some extent) some, or all, of a vehicle's driving functions, e.g., speed, telemetry, braking, etc. The vehicle is typically equipped with one or more sensors to provide the system with current information regarding the driving environment. The current information for the driving environment is typically used by the driving system to determine how to drive on roadways.

One of the major tasks related to driving is classifying.

There is a growing need to provide efficient classification systems and methods.

### SUMMARY

A method, system and non-transitory computer readable medium as illustrated in the application.

### A BRIEF DESCRIPTION OF THE DRAWINGS

The embodiments of the disclosure will be understood and appreciated more fully from the following detailed description, taken in conjunction with the drawings in which:
FIG. 1 illustrates an example of a system;
FIG. 2 illustrates an example of a system;
FIG. 3 illustrates an example of a method;
FIG. 4 illustrates an example of a method;
FIG. 5 illustrates an example of identifiers and signature sets;
FIG. 6 illustrates an example of a method; and
FIG. 7 illustrates examples of intra-signature correlations and intra-signature de-correlations.

### DETAILED DESCRIPTION

There is provided a method, a system and a computer readable medium.

The suggested solution provides accurate and robust signatures that allow a detection of road elements (road objects and/or road scenes).

The suggested solution takes into account the correlation between signature elements (such as identifiers) and also enables to associate more than a single signature per road element - which greatly improves the accuracy of the classification.

According to an embodiment, there are provided signatures that were generated, at least in part, using a neural network. A signature includes identifiers.

According to an embodiment, the identifiers that are indicative of at least one of (a) a feature of a road element associated with the first signature or (b) a feature of a generation of the first signature.

According to an embodiment, the identifiers represent non-zero bits of a sparse representation of a neural network feature vector.

According to an embodiment, the identifiers represent activated neurons of neural network.

According to an embodiment, the identifiers represent non-zero bits of a sparse representation of a neural network feature vector. Different bits are associated with different properties. The properties may be selected in any manner and may be similar to embedding properties. An identifier may be a pointer to the non-zero bit.

According to an embodiment, the identifiers represent activated neurons of neural network - some of the activated neurons or all of the activated neurons. The activated neurons may be those who have the most impactful response to a sensed information unit fed to the neural network.

According to an embodiment, there is provided a method that is computer implemented for dynamic in-correlation signature generation, the method includes:
A. Generating, in a first iterative process, a first signature comprising first identifiers that are indicative of at least one of (a) a feature of a road element associated with the first signature or (b) a feature of a generation of the first signature, the first identifiers being generated in correlation to each other, by determining at each iteration of the first iteration process a first identifier based on relative occurrences of the first identifier in a corresponding first true positive signature set and a corresponding first false positive signature set, such that at each iteration of the first iteration process, a first true positive signature set and a first false positive signature set are determined based on a preceding first true positive signature set and a preceding first false positive signature set, respectively; and
B. Generating, in a second iterative process, a second signature comprising second identifiers that are indicative of (a) a feature of a road element associated with the second signature or (b) a feature of a generation of the second signature, the second identifiers being generated in correlation to each other, by determining at each iteration of the second iterative process a second identifier based on relative occurrences of the second identifier in a corresponding second true positive signature set and a corresponding second false positive signature set, such that at each iteration of the second iteration process, a second true positive signature set and a second false positive signature set are determined based on a preceding second true positive signature set and a preceding second false positive signature set. The second identifiers of the second signature are generated in de-correlation to the first identifiers of the first signature, and wherein the first signature and the second signature collectively represent a cluster of sensed information.

According to an embodiment, the method includes generating, in a third iterative process, a third signature comprising third identifiers that are indicative of (a) a feature of a road element associated with the third signature or (b) a feature of a generation of the third signature, the third identifiers being generated in correlation to each other, by determining at each iteration of the third iterative process a third identifier based on relative occurrences of the third identifier in a corresponding third true positive signature set and a corresponding third false positive signature set, such that at each iteration of the third iteration process, a third true positive signature set and a third false positive signature set are determined based on a preceding third true positive signature set and a preceding third false positive signature set; wherein the third identifiers of the third signature are generated in de-correlation to the second identifiers of the second signature, and wherein the second signature and the third signature collectively represent a cluster of sensed information.

According to an embodiment, the first signature represents a content of multiple sensed information units.

According to an embodiment, the first identifiers represent non-zero bits of a sparse representation of a neural network feature vector.

According to an embodiment, the first identifiers represent activated neurons of neural network.

According to an embodiment, the method includes generating additional signatures until reaching a convergence.

According to an embodiment, the first signature and the second signature are associated with a road element represented by obtained information.

According to an embodiment, the first false positive signature sets represents road elements that are similar to the road element.

According to an embodiment, the method includes generating additional signatures to provide a cluster of signatures associated with the road element, and granting access to the cluster to an inference process.

According to an embodiment, for one of the iterations of the first iteration process, the first true positive signature set and the first false positive signature set are determined in association with perception data.

According to an embodiment, for one of the iterations of the first iteration process, the first true positive signature set and the first false positive signature set are determined in respect to sensed information.

According to an embodiment, for one of the iterations of the first iteration process, the first true positive signature set and the first false positive signature set are determined in association with a target object.

According to an embodiment, the method includes analyzing the first generated signature and the second generated signature in a real-time application.

According to an embodiment, the method includes feeding the first generated signature and the second generated signature to an off-line application for analyzing the first signature and the second signature in the off-line application.

According to an embodiment, there is provided a non-transitory computer readable medium for dynamic in-correlation signature generation, the non-transitory computer readable medium stores instructions that once executed by a processing circuit cause the processing circuit to: generate, in a first iterative process, a first signature comprising first identifiers that are indicative of at least one of (a) a feature of a road element associated with the first signature or (b) a feature of a generation of the first signature, the first identifiers being generated in correlation to each other, by determining at each iteration of the first iteration process a first identifier based on relative occurrences of the first identifier in a corresponding first true positive signature set and a corresponding first false positive signature set, such that at each iteration of the first iteration process, a first true positive signature set and a first false positive signature set are determined based on a preceding first true positive signature set and a preceding first false positive signature set, respectively; and (ii) generate, in a second iterative process, a second signature comprising second identifiers that are indicative of (a) a feature of a road element associated with the second signature or (b) a feature of a generation of the second signature, the second identifiers being generated in correlation to each other, by determining at each iteration of the second iterative process a second identifier based on relative occurrences of the second identifier in a corresponding second true positive signature set and a corresponding second false positive signature set, such that at each iteration of the second iteration process, a second true positive signature set and a second false positive signature set are determined based on a preceding second true positive signature set and a preceding second false positive signature set; wherein the second identifiers of the second signature are generated in de-correlation to the first identifiers of the first signature, and wherein the first signature and the second signature collectively represent a cluster of sensed information.

According to an embodiment, the computer readable medium stores instructions for generating, in a third iterative process, a third signature comprising third identifiers that are indicative of (a) a feature of a road element associated with the third signature or (b) a feature of a generation of the third signature, the third identifiers being generated in correlation to each other, by determining at each iteration of the third iterative process a third identifier based on relative occurrences of the third identifier in a corresponding third true positive signature set and a corresponding third false positive signature set, such that at each iteration of the third iteration process, a third true positive signature set and a third false positive signature set are determined based on a preceding third true positive signature set and a preceding third false positive signature set; wherein the third identifiers of the third signature are generated in de-correlation to the second identifiers of the second signature, and wherein the second signature and the third signature collectively represent a cluster of sensed information.

According to an embodiment, the first signature represents a content of multiple sensed information units.

According to an embodiment, the first identifiers represent non-zero bits of a sparse representation of a neural network feature vector.

According to an embodiment, the first identifiers represent activated neurons of neural network.

According to an embodiment, the computer readable medium stores instructions for generating additional signatures until reaching a convergence.

The different figures illustrates examples of units and/or software and/or information items and/or steps and/or components. These examples are provided for brevity of explanation. At least one of the units and/or software and/or information items and/or steps and/or components is optional or mandatory.

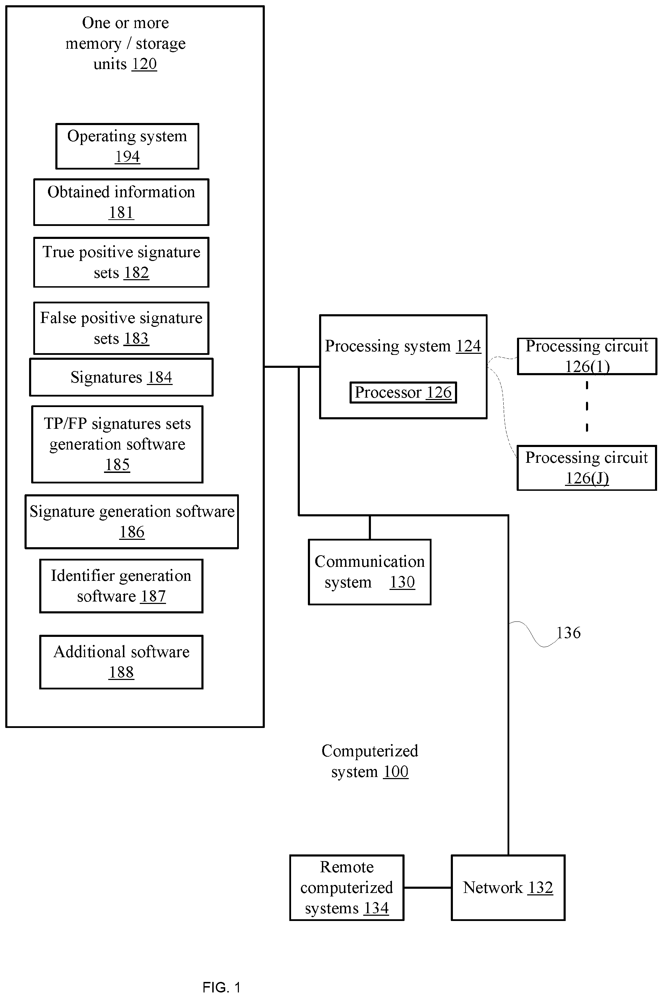

Figure 1 illustrates an example of a computerized system 100 that includes communication system 130, one or more memory and/or storage units 120, processing system 124 including processor 126. The computerized system may be a server, a laptop, a desktop or any other computer and may include or be in communication with a sensing unit and/or a controller.

According to an embodiment, computerized system 100 is in communication with network 132 and one or more other remote computerized systems 134 that are in communication with network 132.

According to an embodiment, the communication system 130 is configured to enable communication between the one or more memory and/or storage units 120 and/or the sensing system 110 and/or any one of the additional units and/or the network 132 (that is in communication with the remote computerized systems).

The memory and/or storage units 120 was shown as storing software. Any reference to software should be applied mutatis mutandis to code and/or firmware and/or instructions and/or commands, and the like.

Processor 126 includes a plurality of processing units 126(1)- 126(J), J is an integer that exceeds one. Any reference to one unit or item should be applied mutatis mutandis to multiple units or items. For example - any reference to processor should be applied mutatis mutandis to multiple processors, any reference to communication system 130 should be applied mutatis mutandis to multiple communication systems.

According to an embodiment, the one or more memory and/or storage units 120 includes one or more memory unit, each memory unit may include one or more memory banks.

According to an embodiment, the one or more memory and/or storage units 120 includes a volatile memory and/or a non-volatile memory. The one or more memory and/or storage units 120 may be a random-access memory (RAM) and/or a read only memory (ROM).

According to an embodiment, the non-volatile memory unit is a mass storage device, which can provide non-volatile storage of computer code, computer readable instructions, data structures, program modules, and other data for the processor or any other unit of vehicle. For example, and not meant to be limiting, a mass storage device can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Any content may be stored in any part or any type of the memory and/or storage units.

According to an embodiment, the at least one memory unit stores at least one database - such as any database known in the art - such as DB29, Microsoft^{®} Access, Microsoft^{®} SQL Server, Oracle^{®}, mySQL, PostgreSQL, and the like.

Various units and/or components are in communication with each other using any communication elements and/or protocols. An example of a communication system is denoted 130. Other communication elements may be provided.

The communication system 130 may be in communication with bus 136. The bus represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus, and all buses specified in this description can also be implemented over a wired or wireless network connection and each of the subsystems.

Network 132 that is located outside the vehicle and is used for communication between the vehicle and at least one remote computing system. By way of example, a remote computing system can be a personal computer, a laptop computer, portable computer, a server, a router, a network computer, a peer device or other common network node, and so on. Logical connections between the processor and either one of remote computing systems can be made via a local area network (LAN) and a general wide area network (WAN). Such network connections can be through a network adapter (may belong to communication system 130) which can be implemented in both wired and wireless environments. Such networking environments are conventional and commonplace in offices, enterprise-wide computer networks, intranets, and a larger network such as the internet.

It should be noted that at least a part of the content illustrated as being stored in one or more memory / storage units 120 may be stored outside the vehicle. It should also be noted that the processor may evaluate signatures generated by a plurality of detectors.

According to an embodiment, the memory and/or storage units 120 stores at least one of: operating system 194, obtained information 181, true positive signature sets 182, false positive signature sets 183, signatures 184 that are generated in iterative processes (that use the true positive signature sets 182 and the false positive signature sets 183), true positive/false positive (TP/FP) generation software 186 for generating at least some of the true positive signature sets 182 and the false positive signature sets 183), identifier generation software 187, and additional software 188.

Using the software, the processing system is configured to execute method 200 and/or step 300 and/or method 800.

The computerized system may be located anywhere - within a vehicle, distributed between vehicles, located outside vehicles, and the like.

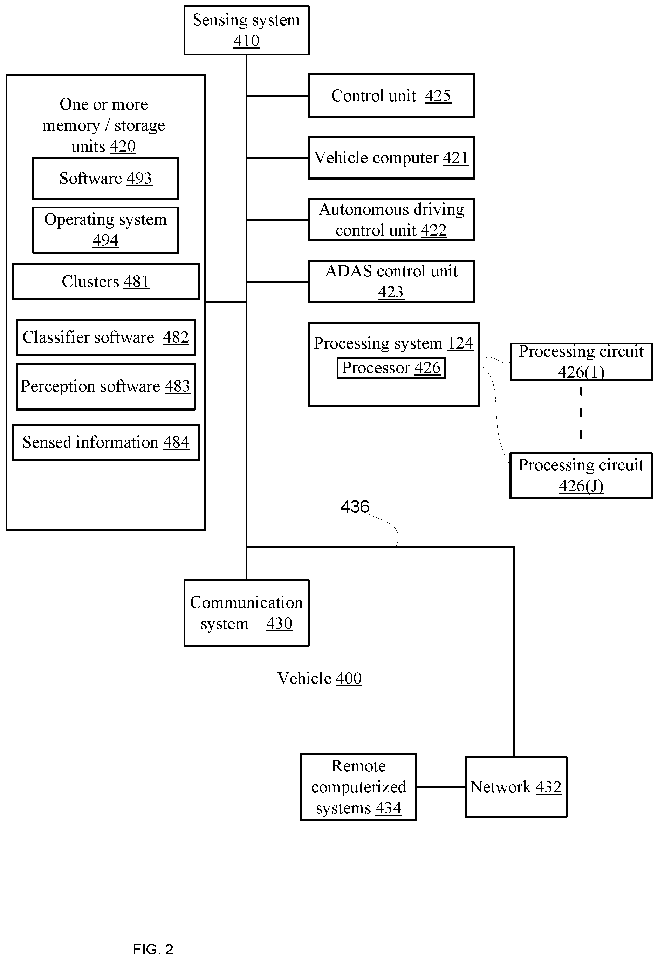

Figure 2 illustrates an example of a vehicle 400, a network 432 and remote computerized systems 434.

The vehicle4 00 includes (a) sensing system 410, a communication system 430, one or more memory and/or storage units 420, and additional units that include control unit 425, advanced driver assistance system (ADAS) control unit 423, autonomous driving control unit 422, processing system 424 including processor 426. Network 423 is in communication with the vehicle and with the remote computerized systems 434 such as servers, cloud computers, and the like.

Communication system 430, one or more memory and/or storage units 420, and processing system 434 may form a computerized system. The computerized system may include one or more other systems and/or units such as sensing system 410

The communication system 430 is configured to enable communication between the one or more memory and/or storage units 420 and/or the sensing system 410 and/or any one of the additional units and/or the network 432 (that is in communication with the remote computerized systems).

The control unit 425 may cooperate with advanced driver assistance system (ADAS) control unit 423, autonomous driving control unit 422 and/or may control or communicate with other vehicle components - including vehicle computer 421.

The one or more memory and/or storage units 420 are illustrated as storing an operating system 494, software 493 (especially software required to perform perception tasks and/or classification tasks and/or tasks for impacting the driving of the vehicle operations), clusters 481 generated by execution of method 200 and/or method 800, a classifier software 483 for classifying road elements sensed during the driving of the vehicle, perception software 483 for providing and processing information regarding a surroundings of the vehicle, and sensed information 484 sensed by the sensing system 410.

The sensing system 410 may include optics, a sensing element group, a readout circuit, and an image signal processor. Optics are followed by a sensing element group such as line of sensing elements or an array of sensing elements that form the sensing element group. The sensing element group is followed by a readout circuit that reads detection signals generated by the sensing element group. An image signal processor is configured to perform an initial processing of the detection signals - for example by improving the quality of the detection information, performing noise reduction, and the like. The sensing system 410 is configured to output one or more sensed information units (SIUs).

The communication system 430 is configured to enable communication between the one or more memory and/or storage units 420 and/or the sensing system 410 and/or any one of the additional units and/or the network 432 (that is in communication with the remote computerized systems 434 - which may include computerized system 400).

The controller 425 is configured to control the operation of the sensing system 410, and/or the one or more memory and/or storage units 420 and/or the one or more additional units (except the controller).

The ADAS control unit 423 is configured to control ADAS operations.

The autonomous driving control unit 422 is configured to control autonomous driving of the autonomous vehicle.

The vehicle computer 421 is configured to control the operation of the vehicle - especially controlling the engine, the transmission, and any other vehicle system or component.

The processing system 424 may include processor 426 and one or more other processors and is configured to execute any method illustrated in the specification.

The one or more memory and/or storage units 420 are configured to store firmware and/or software, one or more operating systems, data and metadata required to the execution of any of the methods mentioned in this application.

The vehicle computer 421 may be in communication with an engine control module, a transmission control module, a powertrain control module, and the like

The memory and/or storage units 420 was shown as storing software. Any reference to software should be applied mutatis mutandis to code and/or firmware and/or instructions and/or commands, and the like.

Processor 426 includes a plurality of processing units 426(1)- 426(J), J is an integer that exceeds one. Any reference to one unit or item should be applied mutatis mutandis to multiple units or items. For example - any reference to processor should be applied mutatis mutandis to multiple processors, any reference to communication system 430 should be applied mutatis mutandis to multiple communication systems.

According to an embodiment, the one or more memory and/or storage units 420 includes one or more memory unit, each memory unit may include one or more memory banks.

According to an embodiment, the one or more memory and/or storage units 420 includes a volatile memory and/or a non-volatile memory. The one or more memory and/or storage units 420 may be a random-access memory (RAM) and/or a read only memory (ROM).

According to an embodiment, the non-volatile memory unit is a mass storage device, which can provide non-volatile storage of computer code, computer readable instructions, data structures, program modules, and other data for the processor or any other unit of vehicle. For example, and not meant to be limiting, a mass storage device can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Any content may be stored in any part or any type of the memory and/or storage units.

According to an embodiment, the at least one memory unit stores at least one database - such as any database known in the art - such as DB29, Microsoft^{®} Access, Microsoft^{®} SQL Server, Oracle^{®}, mySQL, PostgreSQL, and the like.

Various units and/or components are in communication with each other using any communication elements and/or protocols. An example of a communication system is denoted 430. Other communication elements may be provided.

Figure 2 illustrates communication system 430 as being in communication with various processors and/or units and network 432.

The communication system 430 may include a bus. The represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus, and all buses specified in this description can also be implemented over a wired or wireless network connection and each of the subsystems.

Network 432 that is located outside the vehicle and is used for communication between the vehicle and at least one remote computing system. By way of example, a remote computing system can be a personal computer, a laptop computer, portable computer, a server, a router, a network computer, a peer device or other common network node, and so on. Logical connections between the processor and either one of remote computing systems can be made via a local area network (LAN) and a general wide area network (WAN). Such network connections can be through a network adapter (may belong to communication system 430) which can be implemented in both wired and wireless environments. Such networking environments are conventional and commonplace in offices, enterprise-wide computer networks, intranets, and a larger network such as the internet.

It should be noted that at least a part of the content illustrated as being stored in one or more memory / storage units 420 may be stored outside the vehicle. It should also be noted that the processor may evaluate signatures generated by a plurality of detectors.

According to an embodiment, the processor is configured to:

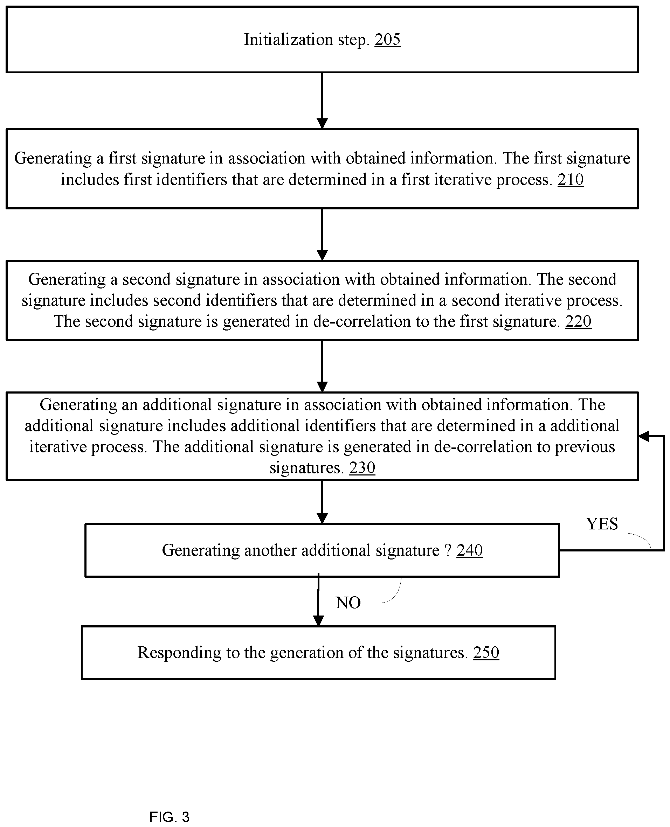

Figure 3 illustrates an example of method 200 that is computer implemented and is for dynamic in-correlation signature generation.

According to an embodiment, method 200 includes initialization step 205.

According to an embodiment initial step 205 includes at least one of:
A. Obtaining an initial first true positive signature set and an initial first false positive signature set to be used during a first iteration of a first iterative process.
B. Obtaining an initial signature of a road element, and generating the initial first true positive signature set and the initial first false positive signature sets based on the initial signature.

According to an embodiment, the initialization step is followed by step 210 of generating a first signature in association with obtained information. The first signature includes first identifiers that are determined in a first iterative process, by producing first true positive signature sets and first false positive signature sets. Each first true positive signature set and each first false positive signature set in a corresponding iteration are determined in correlation to a previous first true positive signature set and a previous first false positive signature set in a preceding iteration of the first iterative process.

According to an embodiment, each first identifier in the corresponding iteration is determined based on relative occurrences of the first identifier within the first true positive signature set and within the first false positive signature set of the corresponding iteration.

According to an embodiment, each first identifier in the corresponding iteration is determined based on a tradeoff between a relative occurrence of the first identifier within the first true positive signature set of the corresponding iteration and a relative occurrence of the first identifier within the first false positive signature set of the corresponding iteration.

According to an embodiment, a first true positive signature set in a corresponding iteration is included in a previous first true positive signature set in a preceding iteration.

According to an embodiment, another first true positive signature set in another corresponding iteration only partially overlaps another previous first true positive signature set in another preceding iteration.

According to an embodiment, step 210 is completed when reaching a first iteration process convergence. An example of such a convergence includes finding that (i) the first true positive signature set and the first false positive signature set in a corresponding iteration are substantially equal to (ii) a first true positive signature set and a first false positive signature set in an iteration that follows the corresponding iteration.

According to an embodiment, step 210 is followed by step 220 of generating a second signature that includes second identifiers that are determined in a second iterative process, by producing second true positive signature sets and second false positive signature sets. Each second true positive signature set and each second false positive signature set in a corresponding iteration are determined in correlation to a previous second true positive signature set and a previous second false positive signature set in a preceding iteration of the second iterative process, such that the second signature is generated in de-correlation to the first signature.

According to an embodiment method 200 includes obtaining an initial first true positive signature set and an initial first false positive signature set in association with a first iteration of the first iterative process. In addition - the first identifiers are associated with a initial first true positive signature set and an initial first false positive signature set.

According to an embodiment, step 220 includes (i) generating an initial second true positive signature set in association with a first iteration of the second iterative process by removing from the initial first true positive signature set any signature that matches the first signature (a match may include having at least a predefined number of identifiers appear in the first signature and in initial first true positive signature), and (ii) generating an initial second false positive signature set in association with a first iteration of the second iterative process by removing from the initial first false positive signature set any signature that matches the first signature (a match may include having at least a predefined number or at least a predefined percent for example at least 60, 65, 70, 75, 80, 85, 90, 95 percent of identifiers appear in the first signature and in an initial first false positive signature).

This removal is performed whenever a new signature is generated - thereby decorrelating the different signatures.

While steps 210 and 220 included generating a first signature and a second signature, the according to an embodiment, method 200 is executed to generate one or more additional signatures, each signature is generated in de-correlation to the previous signature.

According to an embodiment the method includes generating additional signatures until reaching a convergence. An example of a convergence may include that all or a defined majority of signatures of the initial first true positive signature set and an initial first false positive signature set are associated with signatures generated during method 200. The generation of the additional signatures is illustrated by step 230 of generating an additional signature that includes additional identifiers that are determined in an additional iterative process, by producing additional true positive signature sets and additional false positive signature sets. Each additional true positive signature set and each additional false positive signature set in a corresponding iteration are determined in correlation to a previous additional true positive signature set and a previous additional false positive signature set in a preceding iteration of the additional iterative process, such that the additional signature is generated in de-correlation to any of the previously generated signatures.

According to an embodiment step 230 is followed by step 240 of determining whether to generate yet another additional signature - if yes - jumping to step 230 - if no - stopping to generate signatures.

According to an embodiment, the signatures generated by method 200 form a cluster of signatures associated with the road element.

Method 200 may be repeated in association with different road elements to provide multiple clusters of signatures associated with different road elements.

According to an embodiment, method 200 includes step 250 of responding to the end of the generation of the signatures.

Step 250 may include at least one of:
A. Populating a database with a cluster formed by the generated signatures.
B. Transmitting the generated signatures to one or more vehicles with an association to a road element related to the generated signatures.
C. Granting access to one or more clusters generated during the execution of method 200. The access may be provided to an inference process used for classifying road elements sensed by a vehicle.
D. Determining whether to repeat the method or another road element - and selectively repeating the method according to the determination.
E. Analyzing the first generated signature and the second generated signature in a real-time application. The analysis may include checking whether the signature are accurate - for example whether these signature accurately represent the captures items - for example whether the signatures are true positive, true negative, false positive or false negative. The real time application may be related to driving the vehicle.
F. Feeding the first generated signature and the second generated signature to an off-line application for analyzing the first signature and the second signature in the off-line application. The analysis may include checking whether the signature are accurate - for example whether these signature accurately represent the captures items - for example whether the signatures are true positive, true negative, false positive or false negative. The real time application may be related to driving the vehicle.

According to an embodiment, the first false positive signature sets represent other road elements that are similar to the road element. The similarity in this case means that the other road elements may be falsely regarded as the road element of interest. The similarity may be determined manually or automatically - for example by analysis of false positive signatures of road elements that differ from a target road element but are mistakenly identified as being the targe road element.

According to an embodiment, any of the signatures are based on a cropped sensed information unit. Method for generating signatures based on cropped images is illustrated in US patent application 18/595,368 filing date 3/3/2024 which is incorporated herein by reference.

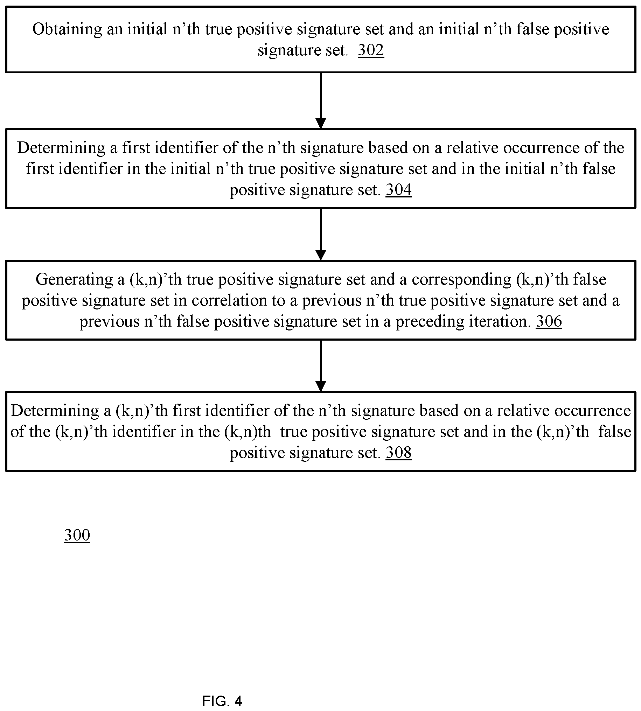

Figure 4 illustrates a step 300 of generating a signature. Step 300 is an example of either one of steps 210, 200 or 230 of method 200.

According to an embodiment step 300 includes a sequence of steps 302, 304, 306 and 308.

Index n refers to the order of the signature - and to the order of the iterative process applied during the generation of the signature.

Index k refers to the order of the identifier being identified.

According to an embodiment, step 302 includes obtaining an initial n'th true positive signature set and an initial n'th false positive signature set. If n equals one - then step 302 is linked to step 205 of method 200. If n exceeds one then step 302 includes obtaining initial sets of signatures that are decorrelated to the generation of one or more previous signatures.

According to an embodiment, step 304 includes determining a first identifier of the n'th signature based on (i) a relative occurrence of the first identifier in the initial n'th true positive signature set and (ii) a relative occurrence of the first identifier in the initial n'th false positive signature set. Step 304 provides a tradeoff between (i) and (ii) - the tradeoff may be a weighted sum or any other function that aims to select identifiers that are more relative appearances in the initial n'th true positive signature set and have fewer relative appearances in the initial n'th false positive signature set.

According to an embodiment, step 306 includes generating a (k,n)'th true positive signature set and a corresponding (k,n)'th false positive signature set in correlation to a previous n'th true positive signature set and a previous n'th false positive signature set in a preceding iteration.

According to an embodiment, step 308 includes determining a (k,n)'th first identifier of the n'th signature based on a relative occurrence of the (k,n)'th identifier in the (k,n)th true positive signature set and in the (k,n)'th false positive signature set.

Steps 306 and 308 may be repeated (with different values of index k) until a completion of a generation of the signature.

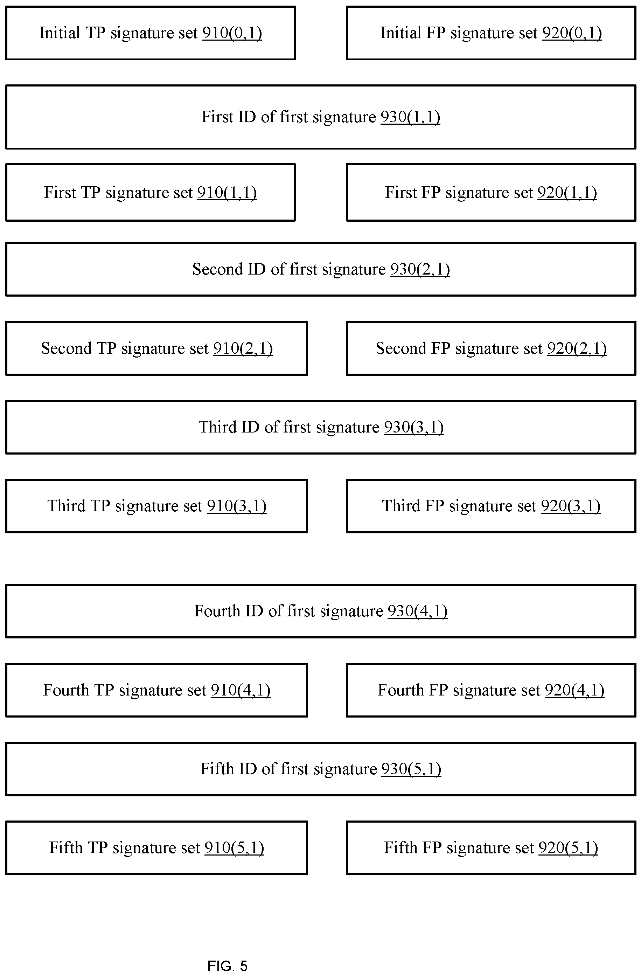

Figure 5 illustrates examples of true positive signature sets associated with a generation of a first signature, false positive signature sets associated with a generation of a first signature, and identifiers associated with a generation of a first signature.

The true positive signature sets includes initial, first, second, third, fourth and fifth true positive signature sets 910(0,1), 910(1,1), 910(2,1), 910(3,1), 910(4,1) and 910(5,1).

The false positive signature sets includes initial, first, second, third, fourth and fifth false positive signature sets 920(0,1), 920(1,1), 920(2,1), 920(3,1), 920(4,1) and 920(5,1).

The first identifiers include first, second, third, fourth and fifth identifiers of the first signature 930(1,1), 930(2,1), 930(3,1), 930(4,1) and 930(5,1).

According to an embodiment:
A. The first TP signature set includes all signatures of the initial TP signature set that includes the first identifier of the first signature 930(1,1).
B. The first FP signature set includes all signatures of the initial FP signature set that do not include the first identifier of the first signature 930(1,1).
C. The second TP signature set includes all signatures of the first TP signature set that includes the second identifier of the first signature 930(2,1).
D. The second FP signature set includes all signatures of the first FP signature set that do not include the second identifier of the first signature 930(2,1).
E. The third TP signature set includes all signatures of the second TP signature set that includes the third identifier of the first signature 930(3,1).
F. The third FP signature set includes all signatures of the second FP signature set that do not includes the third identifier of the first signature 930(3,1).
G. The fourth TP signature set includes all signatures of the initial TP signature set that includes at least a half of the previously generated identifiers of the first signature (in this case - at least two of the first, second and third identifiers of the first signature).
H. The fourth FP signature set includes all signatures of the initial FP signature set that do not include at least a half of the previously generated identifiers of the first signature (in this case - at least two of the first, second and third identifiers of the first signature).
I. The fifth TP signature set includes all signatures of the initial TP signature set that includes at least a half of the previously generated identifiers of the first signature (in this case - at least two of the first, second, third and fourth identifiers of the first signature).
J. The fifth FP signature set includes all signatures of the initial FP signature set that do not include at least a half of the previously generated identifiers of the first signature (in this case - at least two of the first, second, and third and fourth identifiers of the first signature).

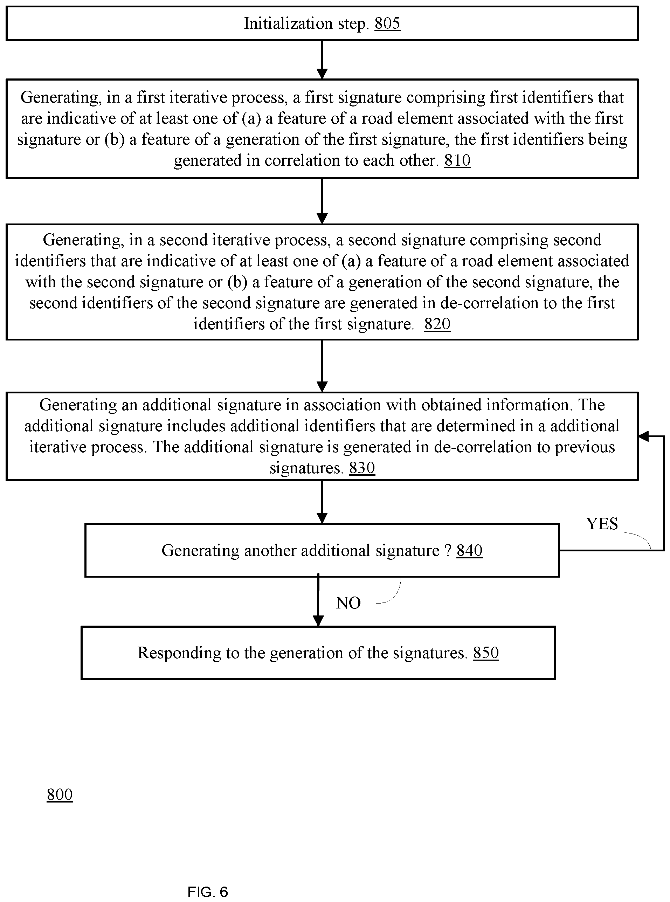

Figure 6 illustrates an example of method 800 that is computer implemented for dynamic in-correlation signature generation.

According to an embodiment, method 800 includes initialization step 805.

According to an embodiment initialization step 805 includes at least one of:
A. Obtaining an initial first true positive signature set and an initial first false positive signature set to be used during a first iteration of a first iterative process.
B. Obtaining an initial signature of a road element, and generating the initial first true positive signature set and the initial first false positive signature sets based on the initial signature.

According to an embodiment, step 805 is followed by step 810 of (i) generating, in a first iterative process, a first signature comprising first identifiers that are indicative of at least one of (a) a feature of a road element associated with the first signature or (b) a feature of a generation of the first signature, the first identifiers being generated in correlation to each other, by determining at each iteration of the first iteration process a first identifier based on relative occurrences of the first identifier in a corresponding first true positive signature set and a corresponding first false positive signature set, such that at each iteration of the first iteration process, a first true positive signature set and a first false positive signature set are determined based on a preceding first true positive signature set and a preceding first false positive signature set, respectively.

According to an embodiment, step 810 may be preceded by step 802 of.

According to an embodiment, step 810 is followed by step 820 of generating, in a second iterative process, a second signature comprising second identifiers that are indicative of (a) a feature of a road element associated with the second signature or (b) a feature of a generation of the second signature, the second identifiers being generated in correlation to each other, by determining at each iteration of the second iterative process a second identifier based on relative occurrences of the second identifier in a corresponding second true positive signature set and a corresponding second false positive signature set, such that at each iteration of the second iteration process, a second true positive signature set and a second false positive signature set are determined based on a preceding second true positive signature set and a preceding second false positive signature set.

According to an embodiment, the second identifiers of the second signature are generated in de-correlation to the first identifiers of the first signature.

According to an embodiment, the first signature and the second signature collectively represent a cluster of sensed information.

According to an embodiment, step 830 of generating, in an additional iterative process, an additional signature comprising additional identifiers that are indicative of (a) a feature of a road element associated with the additional signature or (b) a feature of a generation of the additional signature, the additional identifiers being generated in correlation to each other, by determining at each iteration of the additional iterative process a additional identifier based on relative occurrences of the additional identifier in a corresponding additional true positive signature set and a corresponding additional false positive signature set, such that at each iteration of the additional iteration process, an additional true positive signature set and an additional false positive signature set are determined based on a preceding additional true positive signature set and a preceding additional false positive signature set; wherein the additional identifiers of the additional signature are generated in de-correlation to the second identifiers of the second signature, and wherein the second signature and the additional signature collectively represent a cluster of sensed information. The additional signature may be the third signature or be a signature that follows the generation of the third signature.

According to an embodiment, method 800 may continue to generate additional information until converging.

According to an embodiment step 830 is followed by step 840 of determining whether to generate yet another additional signature - if yes - jumping to step 830 - if no - stopping to generate signatures.

According to an embodiment, once all signatures are generated step 840 proceeds to step 850 of responding to the generation of the signatures.

According to an embodiment, step 850 may include at least one of:
A. Populating a database with a cluster formed by the generated signatures.
B. Transmitting the generated signatures to one or more vehicles with an association to a road element related to the generated signatures.
C. Granting access to one or more clusters generated during the execution of method 200. The access may be provided to an inference process used for classifying road elements sensed by a vehicle.
D. Determining whether to repeat the method or another road element - and selectively repeating the method according to the determination.
E. Analyzing the first generated signature and the second generated signature in a real-time application. The analysis may include checking whether the signature are accurate - for example whether these signature accurately represent the captures items - for example whether the signatures are true positive, true negative, false positive or false negative. The real time application may be related to driving the vehicle.
F. Feeding the first generated signature and the second generated signature to an off-line application for analyzing the first signature and the second signature in the off-line application. The analysis may include checking whether the signature are accurate - for example whether these signature accurately represent the captures items - for example whether the signatures are true positive, true negative, false positive or false negative. The real time application may be related to driving the vehicle.

According to an embodiment, the first signature represents a content of multiple sensed information units.

According to an embodiment, the first identifiers represent non-zero bits of a sparse representation of a neural network feature vector. Different bits are associated with different properties. The properties may be selected in any manner and may be similar to embedding properties. A first identifier may be a pointer to the non-zero bit.

According to an embodiment, the first identifiers represent activated neurons of neural network - some of the activated neurons or all of the activated neurons. The activated neurons may be those who have the most impactful response to a sensed information unit fed to the neural network.

According to an embodiment, the first signature and the second signature are associated with a road element represented by obtained information.

According to an embodiment, the first false positive signature sets represents road elements that are similar to the road element.

According to an embodiment, the method includes generating additional signatures to provide a cluster of signatures associated with the road element, and granting access to the cluster to an inference process.

According to an embodiment, for one of the iterations of the first iteration process, the first true positive signature set and the first false positive signature set are determined in association with perception data.

According to an embodiment, for one of the iterations of the first iteration process, the first true positive signature set and the first false positive signature set are determined in respect to sensed information.

According to an embodiment, for one of the iterations of the first iteration process, the first true positive signature set and the first false positive signature set are determined in association with a target object.

By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information, and which can be accessed by a computer.

According to an embodiment, object classification system computer 701 is configured to execute any method illustrated in the application.

According to an embodiment the object classification system computer 701 is in communication with one or more sensors of one or more types that are associated with the vehicle.

According to an embodiment the object classification system computer 701 is in communication with other vehicle computes such as control computers that are configured to control one or more vehicle units such as an engine controlling computer, a powertrain controlling computer, and/or with an autonomous driving unit configured to control autonomous driving, an ADAS unit configured to control ADAS operations, a path unit configured to navigate the vehicle, and the like. Each unit includes a processing circuit and/or stores in a non-transitory computer readable medium software and/or firmware and/or code and/or instructions for fulfilling the role of the unit.

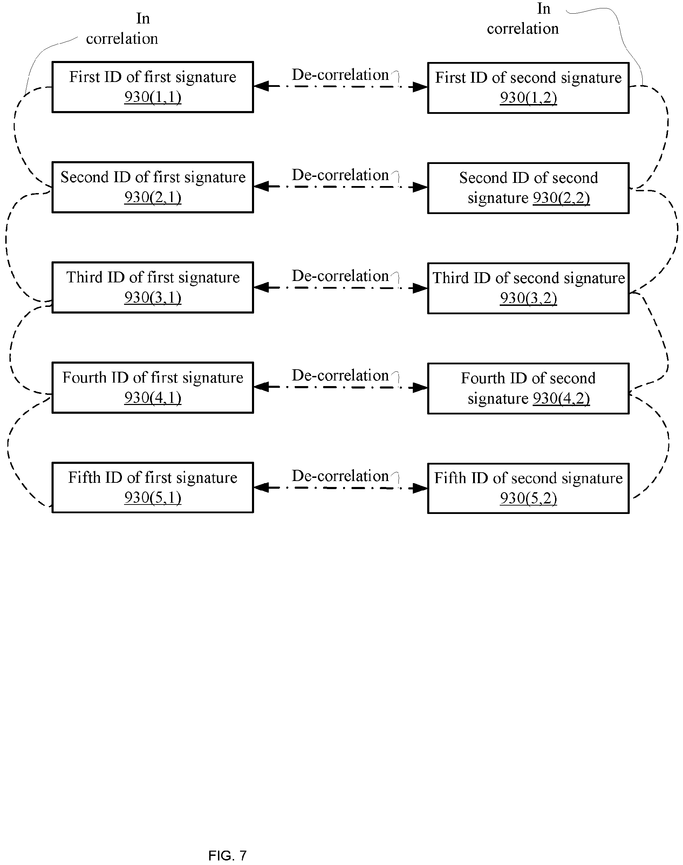

Figure 7 illustrates an example of (a) a correlation between first till fifth identifiers (930(1,1)-930(5,1)) of a first signature, (b) a correlation between first till fifth identifiers (930(1,2)-930(5,2)) of a second signature, and (c) a decorrelation between the identifiers of the first signature and identifiers of the second signatures.

Any combination of any step of any method illustrated in the application is provided.

According to an embodiment, there is provided a method that is computer implemented and is for dynamic in-correlation signature generation, the method includes (i) generating a first signature in association with obtained information, the first signature includes first identifiers that are determined in a first iterative process, by producing first true positive signature sets and first false positive signature sets, wherein each first true positive signature set and each first false positive signature set in a corresponding iteration are determined in correlation to a previous first true positive signature set and a previous first false positive signature set in a preceding iteration of the first iterative process; and (ii) generating a second signature includes second identifiers that are determined in a second iterative process, by producing second true positive signature sets and second false positive signature sets, wherein each second true positive signature set and each second false positive signature set in a corresponding iteration are determined in correlation to a previous second true positive signature set and a previous second false positive signature set in a preceding iteration of the second iterative process, such that the second signature is generated in de-correlation to the first signature.

According to an embodiment, each first identifier in the corresponding iteration is determined based on relative occurrences of the first identifier within the first true positive signature set and within the first false positive signature set of the corresponding iteration.

According to an embodiment, each first identifier in the corresponding iteration is determined based on a tradeoff between a relative occurrence of the first identifier within the first true positive signature set of the corresponding iteration and a relative occurrence of the first identifier within the first false positive signature set of the corresponding iteration.

According to an embodiment, a first true positive signature set in a corresponding iteration is included in a previous first true positive signature set in a preceding iteration.

According to an embodiment, another first true positive signature set in another corresponding iteration only partially overlaps another previous first true positive signature set in another preceding iteration.

According to an embodiment the method includes obtaining an initial first true positive signature set and an initial first false positive signature set to be used during a first iteration of the first iterative process.

According to an embodiment the method includes obtaining an initial signature of a road element, and generating the initial first true positive signature set and the initial first false positive signature sets based on the initial signature.

The method according to claim includes completing the first iterative process when (i) the first true positive signature set and the first false positive signature set in a corresponding iteration are substantially equal to (ii) a first true positive signature set and a first false positive signature set in an iteration that follows the corresponding iteration.

According to an embodiment the method includes obtaining an initial first true positive signature set and an initial first false positive signature set in association with a first iteration of the first iterative process, wherein the first identifiers are associated with a Initial first true positive signature set and an initial first false positive signature set.

According to an embodiment the method includes (i) generating an initial second true positive signature set in association with a first iteration of the second iterative process by removing from the initial first true positive signature set any signature appearing in the initial first true positive signature set, and (ii) generating an initial second false positive signature set in association with a first iteration of the second iterative process by removing from the initial first false positive signature set any signature appearing in the initial first false positive signature set.

According to an embodiment the method includes generating additional signatures until reaching a convergence.

According to an embodiment, the first signature and the second signature are associated with a road element represented by the obtained information.

According to an embodiment, the first false positive signature sets represents road elements that are similar to the road element.

According to an embodiment the method includes generating additional signatures to provide a cluster of signatures associated with the road element, and granting access to the cluster to an inference process.

According to an embodiment there is provided a non-transitory computer readable medium for dynamic in-correlation signature generation, the non-transitory computer readable medium stores instructions that once executed by a processing circuit cause the processing circuit to: (i) generate a first signature in association with obtained information, the first signature includes first identifiers that are determined in a first iterative process, by producing first true positive signature sets and first false positive signature sets, wherein each first true positive signature set and each first false positive signature set in a corresponding iteration are determined in correlation to a previous first true positive signature set and a previous first false positive signature set in a preceding iteration of the first iterative process; and (ii)
generate a second signature includes second identifiers that are determined in a second iterative process, by producing second true positive signature sets and second false positive signature sets, wherein each second true positive signature set and each second false positive signature set in a corresponding iteration are determined in correlation to a previous second true positive signature set and a previous second false positive signature set in a preceding iteration of the second iterative process, such that the second signature is generated in de-correlation to the first signature.

According to an embodiment, each first identifier in the corresponding iteration is determined based on relative occurrences of the first identifier within the first true positive signature set and within the first false positive signature set of the corresponding iteration.

According to an embodiment, each first identifier in the corresponding iteration is determined based on a tradeoff between a relative occurrence of the first identifier within the first true positive signature set of the corresponding iteration and a relative occurrence of the first identifier within the first false positive signature set of the corresponding iteration.

According to an embodiment, a first true positive signature set in a corresponding iteration is included in a previous first true positive signature set in a preceding iteration.

According to an embodiment, another first true positive signature set in another corresponding iteration only partially overlaps another previous first true positive signature set in another preceding iteration.

According to an embodiment, the non-transitory computer readable medium stores instructions for obtaining an initial first true positive signature set and an initial first false positive signature set to be used during a first iteration of the first iterative process.

According to an embodiment, the non-transitory computer readable medium stores instructions for obtaining an initial signature of a road element, and generating the initial first true positive signature set and the initial first false positive signature sets based on the initial signature.

According to an embodiment, the non-transitory computer readable medium stores instructions for completing the first iterative process when (i) the first true positive signature set and the first false positive signature set in a corresponding iteration are substantially equal to (ii) a first true positive signature set and a first false positive signature set in an iteration that follows the corresponding iteration.

According to an embodiment, the non-transitory computer readable medium stores instructions for obtaining an initial first true positive signature set and an initial first false positive signature set in association with a first iteration of the first iterative process, wherein the first identifiers are associated with a initial first true positive signature set and an initial first false positive signature set.

According to an embodiment, the non-transitory computer readable medium stores instructions for (i) generating an initial second true positive signature set in association with a first iteration of the second iterative process by removing from the initial first true positive signature set any signature appearing in the initial first true positive signature set, and (ii) generating an initial second false positive signature set in association with a first iteration of the second iterative process by removing from the initial first false positive signature set any signature appearing in the initial first false positive signature set.

According to an embodiment, the non-transitory computer readable medium stores instructions for generating additional signatures until reaching a convergence.

According to an embodiment, the first signature and the second signature are associated with a road element represented by the obtained information.

According to an embodiment, the first false positive signature sets represents road elements that are similar to the road element.

According to an embodiment, the non-transitory computer readable medium stores instructions for generating additional signatures to provide a cluster of signatures associated with the road element, and granting access to the cluster to an inference process.

In the foregoing detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

The subject matter regarding the invention is particularly pointed out and distinctly claimed in the concluding portion of the specification. The invention, however, both as to organization and method of operation, together with objects, features, and advantages thereof, may best be understood by reference to the following detailed description when read with the accompanying drawings.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

Because the illustrated embodiments of the present invention may for the most part, be implemented using electronic components and circuits known to those skilled in the art, details will not be explained in any greater extent than that considered necessary as illustrated above, for the understanding and appreciation of the underlying concepts of the present invention and in order not to obfuscate or distract from the teachings of the present invention.

Any reference in the specification to a method should be applied mutatis mutandis to a device or system capable of executing the method and/or to a non-transitory computer readable medium that stores instructions for executing the method.

Any reference in the specification to a system or device should be applied mutatis mutandis to a method that may be executed by the system, and/or may be applied mutatis mutandis to non-transitory computer readable medium that stores instructions executable by the system.

Any reference in the specification to a non-transitory computer readable medium should be applied mutatis mutandis to a device or system capable of executing instructions stored in the non-transitory computer readable medium and/or may be applied mutatis mutandis to a method for executing the instructions.

Any combination of any module or unit listed in any of the figures, any part of the specification and/or any claims may be provided.

Any one of transformation module, active learning module, or clustering module, or any other module described herein, may be implemented in hardware and/or code, instructions and/or commands stored in a non-transitory computer readable medium, may be included in a vehicle, outside a vehicle, in a mobile device, in a server, and the like.

The vehicle may be any type of vehicle - such as a ground transportation vehicle, an airborne vehicle, or a water vessel.

The specification and/or drawings may refer to an image. An image is an example of a media unit. Any reference to an image may be applied mutatis mutandis to a media unit. A media unit may be an example of sensed information. Any reference to a media unit may be applied mutatis mutandis to any type of natural signal such as but not limited to signal generated by nature, signal representing human behavior, signal representing operations related to the stock market, a medical signal, financial series, geodetic signals, geophysical, chemical, molecular, textual and numerical signals, time series, and the like. Any reference to a media unit may be applied mutatis mutandis to sensed information. The sensed information may be of any kind and may be sensed by any type of sensors - such as a visual light camera, an audio sensor, a sensor that may sense infrared, radar imagery, ultrasound, electro-optics, radiography, LIDAR (light detection and ranging), etc. The sensing may include generating samples (for example, pixel, audio signals) that represent the signal that was transmitted, or otherwise reach the sensor.

The specification and/or drawings may refer to a spanning element. A spanning element may be implemented in software or hardware. Different spanning element of a certain iteration are configured to apply different mathematical functions on the input they receive. Nonlimiting examples of the mathematical functions include filtering, although other functions may be applied.

The specification and/or drawings may refer to a concept structure. A concept structure may include one or more clusters. Each cluster may include signatures and related metadata. Each reference to one or more clusters may be applicable to a reference to a concept structure.

The specification and/or drawings may refer to a processor. The processor may be a processing circuitry. The processing circuitry may be implemented as a central processing unit (CPU), and/or one or more other integrated circuits such as application-specific integrated circuits (ASICs), field programmable gate arrays (FPGAs), full-custom integrated circuits, etc., or a combination of such integrated circuits.

Any combination of any steps of any method illustrated in the specification and/or drawings may be provided.

Any combination of any subject matter of any of claims may be provided.

Any combinations of systems, units, components, processors, sensors, illustrated in the specification and/or drawings may be provided.

Any reference to an object may be applicable to a pattern. Accordingly - any reference to object detection is applicable mutatis mutandis to a pattern detection.

A situation may be a singular location / combination of properties at a point in time. A scenario is a series of events that follow logically within a causal frame of reference. Any reference to a scenario should be applied mutatis mutandis to a situation.

The sensed information unit may be sensed by one or more sensors of one or more types. The one or more sensors may belong to the same device or system - or may belong to different devices of systems.

A perception unit may be provided and may be preceded by the one or more sensors and/or by one or more interfaces from receiving one or more sensed information units. The perception unit may be configured to receive a sensed information unit from an I/O interface and/or from a sensor. The perception unit may be followed by multiple narrow AI agents - also referred to as an ensemble of narrow AI agents.

A sensed information unit may or may not be processed before reaching the perception unit. Any processing may be providing - filtering, noise reduction, and the like.

## Claims

1. A method that is computer implemented for dynamic in-correlation signature generation, comprising:
generating, in a first iterative process, a first signature comprising first identifiers that are indicative of at least one of (a) a feature of a road element associated with the first signature or (b) a feature of a generation of the first signature, the first identifiers being generated in correlation to each other, by determining at each iteration of the first iteration process a first identifier based on relative occurrences of the first identifier in a corresponding first true positive signature set and a corresponding first false positive signature set, such that at each iteration of the first iteration process, a first true positive signature set and a first false positive signature set are determined based on a preceding first true positive signature set and a preceding first false positive signature set, respectively; and
generating, in a second iterative process, a second signature comprising second identifiers that are indicative of (a) a feature of a road element associated with the second signature or (b) a feature of a generation of the second signature, the second identifiers being generated in correlation to each other, by determining at each iteration of the second iterative process a second identifier based on relative occurrences of the second identifier in a corresponding second true positive signature set and a corresponding second false positive signature set, such that at each iteration of the second iteration process, a second true positive signature set and a second false positive signature set are determined based on a preceding second true positive signature set and a preceding second false positive signature set; wherein the second identifiers of the second signature are generated in de-correlation to the first identifiers of the first signature, and wherein the first signature and the second signature collectively represent a cluster of sensed information.

2. The method according to claim 1 further comprising generating, in a third iterative process, a third signature comprising third identifiers that are indicative of (a) a feature of a road element associated with the third signature or (b) a feature of a generation of the third signature, the third identifiers being generated in correlation to each other, by determining at each iteration of the third iterative process a third identifier based on relative occurrences of the third identifier in a corresponding third true positive signature set and a corresponding third false positive signature set, such that at each iteration of the third iteration process, a third true positive signature set and a third false positive signature set are determined based on a preceding third true positive signature set and a preceding third false positive signature set; wherein the third identifiers of the third signature are generated in de-correlation to the second identifiers of the second signature, and wherein the second signature and the third signature collectively represent a cluster of sensed information.

3. The method according to claim 1 or 2, wherein the first signature represents a content of multiple sensed information units.

4. The method according to claim 1 or 2, wherein the first identifiers represent non-zero bits of a sparse representation of a neural network feature vector.

5. The method according to claim 1 or 2, wherein the first identifiers represent activated neurons of neural network.

6. The method according to anyone of claims 1-5, comprising generating additional signatures until reaching a convergence.

7. The method according to anyone of claims 1-6, wherein the first signature and the second signature are associated with a road element represented by obtained information.

8. The method according to claim 7, wherein the first false positive signature sets represents road elements that are similar to the road element.

9. The method according to claim 7 or 8, further comprising generating additional signatures to provide a cluster of signatures associated with the road element, and granting access to the cluster to an inference process.

10. The method according to anyone of claims 1-9, wherein for one of the iterations of the first iteration process, the first true positive signature set and the first false positive signature set are determined in association with perception data.

11. The method according to anyone of claims 1-9, wherein for one of the iterations of the first iteration process, the first true positive signature set and the first false positive signature set are determined in respect to sensed information.

12. The method according to anyone of claims 1-9, wherein for one of the iterations of the first iteration process, the first true positive signature set and the first false positive signature set are determined in association with a target object.

13. The method according to anyone of claims 1-12, further comprising analyzing the first generated signature and the second generated signature in a real-time application; and/or feeding the first generated signature and the second generated signature to an off-line application for analyzing the first signature and the second signature in the off-line application.

14. A non-transitory computer readable medium for dynamic in-correlation signature generation, the non-transitory computer readable medium stores instructions that once executed by a processing circuit cause the processing circuit to:
generate, in a first iterative process, a first signature comprising first identifiers that are indicative of at least one of (a) a feature of a road element associated with the first signature or (a) a feature of a generation of the first signature, the first identifiers being generated in correlation to each other, by determining at each iteration of the first iteration process a first identifier based on relative occurrences of the first identifier in a corresponding first true positive signature set and a corresponding first false positive signature set, such that at each iteration of the first iteration process, a first true positive signature set and a first false positive signature set are determined based on a preceding first true positive signature set and a preceding first false positive signature set, respectively; and
generate, in a second iterative process, a second signature comprising second identifiers that are indicative of (a) a feature of a road element associated with the second signature or (b) a feature of a generation of the second signature, the second identifiers being generated in correlation to each other, by determining at each iteration of the second iterative process a second identifier based on relative occurrences of the second identifier in a corresponding second true positive signature set and a corresponding second false positive signature set, such that at each iteration of the second iteration process, a second true positive signature set and a second false positive signature set are determined based on a preceding second true positive signature set and a preceding second false positive signature set; wherein the second identifiers of the second signature are generated in de-correlation to the first identifiers of the first signature, and wherein the first signature and the second signature collectively represent a cluster of sensed information.

15. The non-transitory computer readable medium according to claim 9, that further stores instructions for generating, in a third iterative process, a third signature comprising third identifiers that are indicative of (a) a feature of a road element associated with the third signature or (b) a feature of a generation of the third signature, the third identifiers being generated in correlation to each other, by determining at each iteration of the third iterative process a third identifier based on relative occurrences of the third identifier in a corresponding third true positive signature set and a corresponding third false positive signature set, such that at each iteration of the third iteration process, a third true positive signature set and a third false positive signature set are determined based on a preceding third true positive signature set and a preceding third false positive signature set; wherein the third identifiers of the third signature are generated in de-correlation to the second identifiers of the second signature, and wherein the second signature and the third signature collectively represent a cluster of sensed information.
